# EUROPÄISCHE PATENTANMELDUNG

(11) **EP 3 582 031 A1**
(43) Veröffentlichungstag der Anmeldung: **18.12.2019**
(21) Anmeldenummer: 18176904.3
(22) Anmeldetag: 11.06.2018
(51) Int. Cl.: G05B 19/00

(54) **SICHERE VERWALTUNG VON ZUGANGSDATEN FÜR STEUEREINRICHTUNGEN**

(71) Anmelder: Siemens Aktiengesellschaft, 80333 München (DE)
(72) Erfinder: Hegmann, Michael, 91126 Schwabach (DE)

(57) **Zusammenfassung**

Eine Steuereinrichtung (1) einer Maschine oder Anlage (2) nimmt zu beliebigen Zeitpunkten Zugangsdaten (D) entgegen und vergleicht sie mit einer aktuellen Zugangsberechtigung (D'). Im Falle der Übereinstimmung gibt die Steuereinrichtung (1) den Zugriff auf innerhalb der Steuereinrichtung (1) gespeicherte Nutzdaten (ND) frei, anderenfalls gibt sie den Zugriff auf die Nutzdaten (ND) zumindest vorläufig nicht frei. Die Steuereinrichtung (1) erstellt und/oder berücksichtigt die Nutzdaten (ND) im Rahmen der Steuerung der Maschine oder Anlage (2). Die Steuereinrichtung (1) nimmt von Zeit zu Zeit über eine Anbindung (7) an ein Rechnernetz (8) von einem Rechner (9) verschlüsselte Verifizierungsdaten (VD) entgegen und speichert die entgegengenommenen Verifizierungsdaten (VD) in verschlüsselter oder in unverschlüsselter Form als aktuelle Verifizierungsdaten (VD'). Sie leitet die aktuelle Zugangsberechtigung (D') aus den unverschlüsselten aktuellen Verifizierungsdaten (VD') ab.

## Beschreibung

Die vorliegende Erfindung geht aus von einem Betriebsverfahren für eine Steuereinrichtung einer Maschine oder Anlage,
- wobei die Steuereinrichtung zu beliebigen Zeitpunkten Zugangsdaten entgegennimmt,
- wobei die Steuereinrichtung die entgegengenommenen Zugangsdaten mit einer aktuellen Zugangsberechtigung vergleicht,
- wobei die Steuereinrichtung im Falle der Übereinstimmung den Zugriff auf innerhalb der Steuereinrichtung gespeicherte Nutzdaten freigibt und im Falle der Nichtübereinstimmung den Zugriff auf die innerhalb der Steuereinrichtung gespeicherten Nutzdaten zumindest vorläufig nicht freigibt,
- wobei die Steuereinrichtung die Nutzdaten im Rahmen der Steuerung der Maschine oder Anlage erstellt und/oder berücksichtigt.

Die vorliegende Erfindung geht weiterhin aus von einem Computerprogramm, das Maschinencode umfasst, der von einer Steuereinrichtung für eine Anlage oder Maschine abarbeitbar ist, wobei die Abarbeitung des Maschinencodes durch die Steuereinrichtung bewirkt, dass die Steuereinrichtung ein Betriebsverfahren der eingangs genannten Art ausführt.

Die vorliegende Erfindung geht aus weiterhin von einer Steuereinrichtung für eine Anlage oder Maschine,
- wobei die Steuereinrichtung eine Anbindung an ein Rechnernetz aufweist, über welche die Steuereinrichtung mit einem Rechner verbindbar ist,
- wobei die Steuereinrichtung mit einem Computerprogramm der eingangs genannten Art programmiert ist, so dass sie ein Betriebsverfahren der eingangs genannten Art ausführt.

Steuereinrichtungen für Maschinen und Anlagen werden in vielen Fällen von Personen bedient. Die jeweilige Person macht eine Vorgabe, welche von der Steuereinrichtung im Rahmen der Ausführung ihres normalen Betriebsprogramms, also der Steuerung der Maschine oder Anlage, berücksichtigt wird. Bei manchen Maschinen oder Anlagen kann völlig unkritisch sein, ob die Person, welche die Vorgaben macht, zu diesen Vorgaben autorisiert ist. Bei anderen Maschinen oder Anlagen muss jedoch zuverlässig gewährleistet sein, dass Vorgaben, welche der Steuereinrichtung vorgegeben werden, nur von hierzu autorisierten Personen vorgegeben werden.

Dies kann bereits Vorgaben des normalen Betriebs betreffen, also beispielsweise, welches Steuerprogramm ausgeführt werden soll oder zu welchen Zeitpunkten ein Steuerprogramm ausgeführt werden soll. Um zu gewährleisten, dass derartige Vorgaben nur von hierzu autorisierten Personen gemacht werden, ist es üblich, dass die entsprechende Person sich zunächst bei der Steuerung anmelden muss, wobei sie einen Benutzernamen und ein Passwort oder eine ähnliche Autorisierung vorgibt.

Die Authentifizierung und Autorisierung von "normalen" Benutzern, d.h. von Benutzern, welche die Vorgaben des normalen Betriebs machen, kann auf einfache Weise sicher ausgestaltet werden. Beispielsweise kann beim Betreiber der Maschine oder Anlage ein Administrator (oder eine ähnliche Person) zentral von einem Rechner aus über ein Rechnernetz an die Steuereinrichtung eine Liste von Benutzernamen und zugehörigen Passwörtern übermitteln und diese Liste nach Bedarf aktualisieren. Insbesondere kann diese Liste vom Administrator jederzeit geändert werden, beispielsweise wenn ein Mitarbeiter des Betreibers der Anlage oder Maschine die Firma verlässt oder periodisch nach jeweils einem Monat oder einem ähnlichen Zeitraum. Auch können umgekehrt der Benutzername und das Passwort von der Steuereinrichtung an den Rechner übermittelt werden und bei ordnungsgemäßer Autorisierung des Benutzers vom Rechner aus die Freigabe erfolgen.

Es gibt innerhalb der Steuereinrichtung aber auch Nutzdaten, welche von der Steuereinrichtung im Rahmen der Steuerung der Maschine oder Anlage berücksichtigt werden, bei denen es jedoch unerwünscht ist, dass sie von "normalen" Benutzern eingestellt, geändert und teilweise auch nur eingesehen werden können. Derartige Nutzdaten können beispielsweise die Parametrierung der Steuerung betreffen, beispielsweise die Einstellung von Regelkreisen, mittels derer Teile der Maschine oder Anlage gesteuert werden, oder Diagnosedaten. Die Einstellung, die Änderung und das Einsehen derartiger Nutzdaten soll zwar ebenfalls möglich sein, aber eben nicht durch die "normalen" Benutzer. Vielmehr soll es hierfür erforderlich sein, dass sich ein Servicemitarbeiter des Herstellers der Maschine oder Anlage oder ein Servicemitarbeiter des Herstellers der Steuereinrichtung mit speziellen Zugangsdaten bei der Steuerung anmeldet.

Die Aktualisierung und Änderung und vor allem Geheimhaltung derartiger Zugangsdaten stellt ein erhebliches Problem dar. Insbesondere werden derartige Zugangsdaten in der Regel dem Betreiber der Maschine oder Anlage gar nicht mitgeteilt, so dass er sie weder kennt noch ändern oder aktualisieren kann. Derartige Zugangsdaten bleiben im Stand der Technik oftmals während der gesamten Einsatzdauer der Maschine oder Anlage oder der Steuereinrichtung - das können mehrere Jahre sein - unverändert.

In sicherheitstechnischer Hinsicht stellt dies ein Problem dar, insbesondere eine Schwachstelle für Hackerangriffe. Zum einen stellen Zugangsberechtigungen, die sich über längere Zeit nicht ändern, bereits prinzipiell ein Problem dar. Vor allem aber kennen die Servicemitarbeiter des Herstellers der Maschine oder Anlage oder der Steuereinrichtung die speziellen Zugangsdaten. Verlässt beispielsweise ein derartiger Servicemitarbeiter seinen Arbeitgeber, besteht die Gefahr eines Bruchs der Geheimhaltung der speziellen Zugangsdaten. Erschwerend kommt noch hinzu, dass insbesondere über den speziellen Zugang des Servicemitarbeiters sehr weitgehende Änderungen der Einstellung der Steuereinrichtung mit entsprechend weitreichenden Folgen beim Betrieb der Maschine oder Anlage möglich sind.

Eine mögliche Lösung besteht darin, dass der spezielle Zugang des Servicemitarbeiters an der Steuereinrichtung normalerweise deaktiviert ist und vom Administrator nur kurzzeitig aktiviert wird, so dass der Servicemitarbeiter sich bei der Steuereinrichtung anmelden kann, seine Tätigkeiten ausführen kann und danach wieder abmelden kann. Nachdem Abmelden wird der spezielle Zugang des Servicemitarbeiters vom Administrator wieder deaktiviert. Diese Lösung weist jedoch mehrere Nachteile auf. Zunächst muss innerhalb der Steuereinrichtung eine Möglichkeit geschaffen werden, dass der Administrator sich bei der Steuereinrichtung anmeldet, so dass er den speziellen Zugang des Servicemitarbeiters aktivieren und deaktivieren kann. Weiterhin muss der Administrator persönlich anwesend sein, damit er die Aktivierung und die Deaktivierung vornehmen kann. Weiterhin ist es erforderlich, dass der Administrator sich nicht nur über das Rechnernetz bei der Steuereinrichtung anmelden kann, sondern auch direkt vor Ort. Denn anderenfalls wäre die Aktivierung des Zugangs für den Servicemitarbeiter insbesondere nicht mehr möglich, wenn Probleme an der Steuereinrichtung auftreten, welche die Funktionsfähigkeit der Anbindung an das Rechnernetz betreffen.

Ein weiterer Ansatz besteht darin, dass der spezielle Zugang des Servicemitarbeiters permanent deaktiviert oder gesperrt ist. In diesem Fall ist es unmöglich, spezielle, tiefgreifende Diagnosen und Einstellungen vorzunehmen. Gegebenenfalls müssen längere Stillstände der gesteuerten Maschine oder Anlage in Kauf genommen werden.

Ein weiterer Ansatz besteht darin, die Steuereinrichtung temporär oder permanent mit einem Rechner des Herstellers der Maschine oder Anlage oder der Steuereinrichtung zu verbinden und die Zugangsdaten des Servicemitarbeiters an diesen Rechner zu übertragen und dort zu überprüfen oder umgekehrt die Zugangsberechtigung von diesem Rechner an die Steuereinrichtung zu übertragen. Das Problem bei dieser Vorgehensweise besteht darin, dass die Anbindung an das Rechnernetz gestört sein kann. In diesem Fall kann der Servicemitarbeiter sich nicht mehr bei der Steuereinrichtung anmelden.

Ein weiterer Ansatz besteht darin, dass die Steuereinrichtung im Klartext einen Primärcode an den Servicemitarbeiter vor Ort ausgibt, wobei der Servicemitarbeiter aus dem Primärcode über einen Algorithmus einen Sekundärcode ableitet, den er der Steuereinrichtung vorgegeben muss. Die Schwachstelle dieser Vorgehensweise besteht darin, dass der Algorithmus bekannt werden könnte.

Ein weiterer Ansatz besteht darin, dass die Anmeldung des Servicemitarbeiters bei der Steuereinrichtung nur mit bestimmten Geräten (beispielsweise einem bestimmten Laptop) erfolgen darf, die ein als vertrauenswürdig eingestuftes Zertifikat besitzen. In diesem Fall muss die Steuereinrichtung jedoch in der Lage sein, derartige Zertifikate zuverlässig erkennen zu können. Sie müssen daher in der Steuereinrichtung hinterlegt sein. Auch darf es nicht möglich sein, derartige Zertifikate zu manipulieren oder zu fälschen. Dies ist zwar in der Regel gewährleistet. Es muss jedoch dafür Sorge getragen werden, dass das Zertifikat auf dem Gerät, mittels dessen der Servicemitarbeiter sich bei der Steuereinrichtung anmeldet, mit einem der Zertifikate auf der Steuereinrichtung übereinstimmt. Somit muss es möglich sein, auf der Steuereinrichtung neue Zertifikate zu hinterlegen und veraltete hinterlegte Zertifikate wieder löschen zu können.

Theoretisch ist es denkbar, dass die speziellen Nutzdaten auch von jedem normalen Benutzer geändert werden können. Dadurch würde der spezielle Zugang für den Servicemitarbeiter entbehrlich. Genau eine Änderbarkeit der speziellen Nutzdaten durch jeden normalen Benutzer soll aber vermieden werden.

Die Aufgabe der vorliegenden Erfindung besteht darin, Möglichkeiten zu schaffen, mittels derer die Probleme des Standes der Technik gelöst werden.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 5.

Erfindungsgemäß wird ein Betriebsverfahren der eingangs genannten Art dadurch ausgestaltet,
- dass die Steuereinrichtung von Zeit zu Zeit über eine Anbindung an ein Rechnernetz von einem Rechner verschlüsselte Verifizierungsdaten entgegennimmt und die entgegengenommenen Verifizierungsdaten in verschlüsselter oder in unverschlüsselter Form als aktuelle Verifizierungsdaten abspeichert und
- dass die Steuereinrichtung die aktuelle Zugangsberechtigung aus den unverschlüsselten aktuellen Verifizierungsdaten ableitet.

Die Verifizierungsdaten werden also zwar einerseits von Zeit zu Zeit und damit immer wieder aktualisiert. Dadurch können die Probleme, die durch überalterte Zugangsdaten entstehen können, vermieden werden. Die verschlüsselten Verifizierungsdaten werden aber nicht erst dann übermittelt, wenn Probleme an der Steuereinrichtung, der Maschine oder der Anlage aufgetreten sind und damit insbesondere auch die Anbindung an das Rechnernetz gestört sein könnte, sondern eben von Zeit zu Zeit. Bis zur nächsten Übermittlung neuer Verifizierungsdaten sind dann die zuletzt übermittelten Verifizierungsdaten gültig bzw. aktuell.

In einer bevorzugten Ausgestaltung des Betriebsverfahrens ist vorgesehen, dass die Steuereinrichtung
- Verifizierungsdaten, die zum Zeitpunkt der Entgegennahme der Verifizierungsdaten innerhalb der Steuereinrichtung als aktuelle Verifizierungsdaten gespeichert sind, als alte Verifizierungsdaten gespeichert hält,
- die entgegengenommenen Zugangsdaten auch mit einer aus den alten Verifizierungsdaten abgeleiteten alten Zugangsberechtigung vergleicht und
- den Zugriff auf die innerhalb der Steuereinrichtung gespeicherte Nutzdaten freigibt, wenn die entgegengenommenen Zugangsdaten mit der aktuellen Zugangsberechtigung oder der alten Zugangsberechtigung übereinstimmen, und
- den Zugriff auf die innerhalb der Steuereinrichtung gespeicherte Nutzdaten nur dann nicht freigibt, wenn die entgegengenommenen Zugangsdaten weder mit der aktuellen Zugangsberechtigung noch mit der alten Zugangsberechtigung übereinstimmen.

Durch diese Ausgestaltung wird insbesondere für den Fall, dass Probleme bei der Übermittlung der verschlüsselten Verifizierungsdaten oder bei der Abspeicherung der Verifizierungsdaten als aktuelle Verifizierungsdaten auftreten, immer noch gewährleistet, dass in der Steuereinrichtung gültige Verifizierungsdaten vorhanden sind.

Vorzugsweise wird zum Verschlüsseln und Entschlüsseln der Verifizierungsdaten ein asymmetrisches Verschlüsselungsverfahren angewendet. Vorzugsweise entschlüsselt also die Steuereinrichtung die entgegengenommenen Verifizierungsdaten vor oder nach dem Abspeichern der Verifizierungsdaten mittels eines geheimen Schlüssels, während die Verschlüsselung mittels eines vom geheimen Schlüssel verschiedenen öffentlichen Schlüssels erfolgt. Zu diesem Zweck kann die Steuereinrichtung den öffentlichen Schlüssel zum Abruf über das Rechnernetz und/oder eine an der Steuereinrichtung angeordnete Schnittstelle bereitstellen.

Die Übermittlung der verschlüsselten Verifizierungsdaten von Zeit zu Zeit kann nach Bedarf erfolgen. Beispielsweise ist es möglich, dass die verschlüsselten Verifizierungsdaten der Steuereinrichtung von dem Rechner in periodischen Zeitabständen vorgegeben werden. In diesem Fall ist also der Rechner der aktive Teil, der von sich aus jeweils die verschlüsselten Verifizierungsdaten an die Steuereinrichtung ermittelt. Alternativ ist es möglich, dass die Steuereinrichtung der aktive Teil ist, dass also die Steuereinrichtung die verschlüsselten Verifizierungsdaten über das Rechnernetz vom Rechner abruft. Der Abruf kann beispielsweise aufgrund eines durch die Steuereinrichtung überwachten Zeitablaufs und/oder aufgrund einer Vorgabe eines Aktualisierungsbefehls durch eine Bedienperson erfolgen. Diese Bedienperson kann der Servicemitarbeiter oder eine "normale" Bedienperson sein.

Die Steuereinrichtung kann beispielsweise als CNC (computer numeric control = numerische Steuereinrichtung), als MC (motion control = Bewegungssteuerung) oder als SPS (speicherprogrammierbare Steuerung, oftmals auch als PLC = programmable logic control bezeichnet) ausgebildet sein. Es ist auch möglich, dass die Steuereinrichtung als Antriebssteuerung ausgebildet ist.

Die Aufgabe wird weiterhin durch ein Computerprogramm mit den Merkmalen des Anspruchs 6 gelöst. Erfindungsgemäß ist ein Computerprogramm der eingangs genannten Art derart ausgestaltet, dass die Abarbeitung des Maschinencodes durch die Steuereinrichtung bewirkt, dass die Steuereinrichtung ein erfindungsgemäßes Betriebsverfahren ausführt.

Die Aufgabe wird weiterhin durch eine Steuereinrichtung für eine Anlage oder Maschine mit den Merkmalen des Anspruchs 7 gelöst. Erfindungsgemäß ist eine Steuereinrichtung der eingangs mit einem erfindungsgemäßen Computerprogramm programmiert, so dass sie ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Steuereinrichtung für eine Anlage oder Maschine und weitere Komponenten und
- FIG 2 bis 9: Ablaufdiagramme.

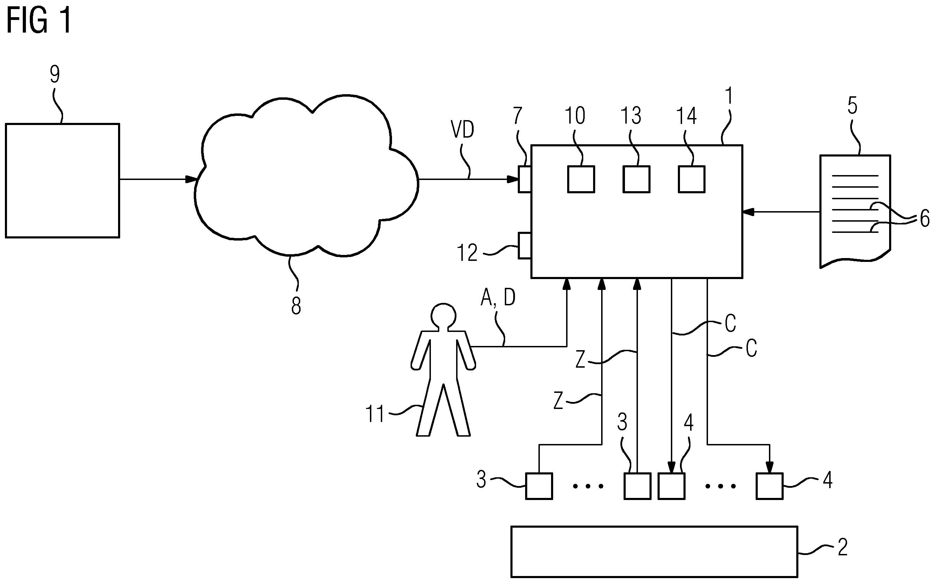

Gemäß FIG 1 soll mittels einer Steuereinrichtung 1 eine Anlage oder Maschine 2 gesteuert werden. Die Anlage oder Maschine 2 kann prinzipiell beliebiger Natur sein. Beispielsweise kann es sich um eine Werkzeugmaschine, einen Roboter, eine Verpackungsmaschine, eine chemische Anlage oder um eine andere Maschine oder Anlage handeln. Auch kann es sich um einen Antrieb handeln. Die Steuereinrichtung 1 ist entsprechend ihrer Anwendung ausgebildet. Beispielsweise bei einer Werkzeugmaschine ist die Steuereinrichtung 1 als CNC (= computer numeric control) ausgebildet. Bei einem Roboter kann die Steuereinrichtung 1 als CNC oder als MC (= motion control) ausgebildet sein. Bei einer anderen Anlage 2, beispielsweise einer Verpackungsmaschine, kann die Steuereinrichtung 1 als MC oder als SPS (= speicherprogrammierbare Steuerung, im Englischen oftmals als PLC = programmable logic control bezeichnet) ausgebildet sein. Bei einem Antrieb handelt es sich um die Antriebssteuerung.

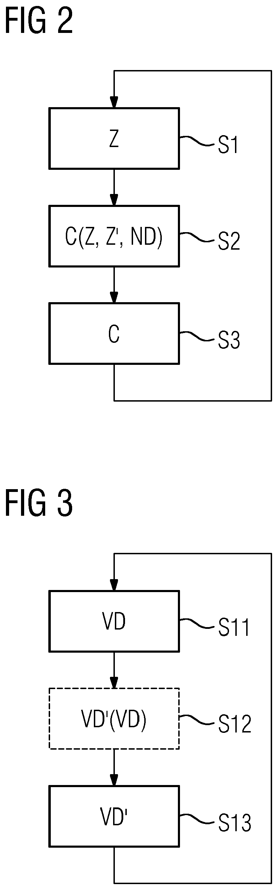

Unabhängig von ihrer konkreten Ausbildung als CNC, MC, SPS oder andersartige Steuereinrichtung führt die Steuereinrichtung 1 entsprechend der Darstellung in FIG 2 in einem Normalbetrieb, in welchem sie die Maschine oder Anlage 2 steuert, zyklisch Schritte S1 bis S3 aus.

Im Schritt S1 nimmt die Steuereinrichtung 1 über Sensoren 3 Zustandsdaten Z der Maschine oder Anlage 2 entgegen, beispielsweise Lagesignale, Geschwindigkeitssignale, Temperatursignale oder ein Ansprechen von Endschaltern. Im Schritt S2 ermittelt die Steuereinrichtung 1 Steuersignale C für Aktoren 4. Im Schritt S3 gibt die Steuereinrichtung 1 die ermittelten Steuersignale C an die Aktoren 4 aus, so dass über die Ansteuerung der Aktoren 4 der Zustand der Maschine oder Anlage 2 beeinflusst wird.

Die Ermittlung des Schrittes S2 wird von der Steuereinrichtung 1 unter Berücksichtigung der Zustandsdaten Z vorgenommen. Zusätzlich berücksichtigt die Steuereinrichtung 1 innerhalb der Steuereinrichtung 1 gespeicherte Zustandsdaten Z' und innerhalb der Steuereinrichtung 1 gespeicherte Nutzdaten ND, nachfolgend kurz als interne Zustandsdaten Z' und interne Nutzdaten ND bezeichnet. Die Steuereinrichtung 1 berücksichtigt also die internen Zustandsdaten Z' und die internen Nutzdaten ND im Rahmen der Steuerung der Maschine oder Anlage 2. Alternativ oder zusätzlich zur Berücksichtigung der Nutzdaten ND ist es auch möglich, dass die Steuereinrichtung 1 die internen Nutzdaten ND erstellt.

Die internen Zustandsdaten Z' können beispielsweise die Werte von Zählern, Merkern oder Timern sein. Sie können sich im Betrieb der Anlage oder Maschine 2, also im Normalbetrieb der Steuereinrichtung 1, ändern. Ein möglicher Grund für eine Änderung ist ein Zeitablauf. Diejenigen internen Nutzdaten ND, die von der Steuereinrichtung 1 bei der Ermittlung der Steuersignale C berücksichtigt werden, sind im Normalbetrieb hingegen - zumindest in der Regel - unveränderlich. Beispielsweise kann es sich bei derartigen internen Nutzdaten ND um Parametrierungen von Reglern handeln, mittels derer die Steuersignale C ermittelt werden. Beispielsweise können die Nutzdaten ND die Proportionalitätskonstante eines P-Reglers oder die Proportionalitätskonstante und die Nachstellzeit eines PI-Reglers umfassen. Diejenigen internen Nutzdaten ND, die von der Steuereinrichtung 1 erstellt werden, können beispielsweise Diagnosedaten sein.

Die Steuereinrichtung 1 ist mit einem Computerprogramm 5 programmiert. Das Computerprogramm 5 umfasst Maschinencode 6, der von der Steuereinrichtung 1 abarbeitbar ist. Die Abarbeitung des Maschinencodes 6 durch die Steuereinrichtung 1 bewirkt zunächst, dass die Steuereinrichtung 1 im Normalbetrieb die Maschine oder Anlage 2 entsprechend der in Verbindung mit FIG 2 erläuterten Vorgehensweise steuert. Gegebenenfalls kann die Steuereinrichtung 1 hierbei eine ergänzende Parametrierungen mit berücksichtigen. Dies ist im Rahmen der vorliegenden Erfindung jedoch von untergeordneter Bedeutung. Zusätzlich führt die Steuereinrichtung 1 jedoch weitere Maßnahmen aus, die nachstehend in Verbindung mit den weiteren FIG erläutert werden. In diesem Zusammenhang ist von Bedeutung, dass die Steuereinrichtung 1 eine Anbindung 7 an ein Rechnernetz 8 aufweist, so dass die Steuereinrichtung 1 mit einem Rechner 9 verbindbar ist. Der Rechner 9 kann beispielsweise von einem Hersteller der Steuereinrichtung 1 oder einem Hersteller der Anlage oder Maschine 2 - beides im Gegensatz zum Betreiber der Anlage oder Maschine 2 - betrieben werden.

Im Rahmen der weiteren Maßnahmen nimmt die Steuereinrichtung 1 gemäß FIG 3 in einem Schritt S11 über die Anbindung 7 an das Rechnernetz 8 von dem Rechner 9 Verifizierungsdaten VD entgegen. Die Verifizierungsdaten VD sind kryptographisch verschlüsselt. Insbesondere können die Verifizierungsdaten VD gemäß einem asymmetrischen kryptographischen Verfahren verschlüsselt sein, also gemäß einem Verfahren, bei dem zum Verschlüsseln ein erster Schlüssel verwendet wird, zum Entschlüsseln hingegen ein von dem ersten Schlüssel verschiedener zweiter Schlüssel. Der erste Schlüssel wird meist als öffentlicher Schlüssel (public key) bezeichnet, der zweite Schlüssel als privater oder geheimer Schlüssel (private key oder secret key). Ein bekanntes derartiges asymmetrisches kryptographisches Verfahren ist das nach seinen Erfindern Rivest, Shamir und Adleman benannte RSA-Verfahren. Es sind aber auch andere Verfahren bekannt.

In einem Schritt S12 entschlüsselt die Steuereinrichtung 1 die entgegengenommenen Verifizierungsdaten VD und ermittelt so entschlüsselte Verifizierungsdaten VD'. In einem Schritt S13 speichert die Steuereinrichtung 1 die entschlüsselten Verifizierungsdaten VD' ab. Die Entschlüsselung des Schrittes S12 bezieht sich in der Regel nur auf die übertragungsbezogene Verschlüsselung. Die mittels des Schrittes S12 ermittelten Verifizierungsdaten VD' sind in der Regel nochmals intern verschlüsselt.

Die gesamten nachfolgenden Ausführungen zu den Verifizierungsdaten VD, VD' basieren auf der Annahme, dass die Steuereinrichtung 1 die entgegengenommenen Verifizierungsdaten VD im Schritt S12 (teilweise) entschlüsselt und dadurch im Schritt S13 die (teilweise) entschlüsselten Verifizierungsdaten VD' abspeichert. Es ist jedoch ebenso möglich, dass der Schritt S12 entfällt und die Steuereinrichtung 1 im Schritt S13 die (vollständig) verschlüsselten Verifizierungsdaten VD abspeichert. Aus diesem Grund ist der Schritt S12 in FIG 3 nur gestrichelt dargestellt.

Die Steuereinrichtung 1 führt die Schritte S11 bis S13 von Zeit zu Zeit aus. Der zeitliche Abstand zwischen zwei Ausführungen der Schritte S11 bis S13 als solcher kann nach Bedarf sein. In der Regel wird er im Bereich von etlichen Tagen liegen, eventuell auch im Bereich von Wochen oder Monaten.

Die Art und Weise, auf welche gewährleistet wird, dass die Verifizierungsdaten VD immer wieder neu an die Steuereinrichtung 1 übermittelt werden, kann nach Bedarf sein.

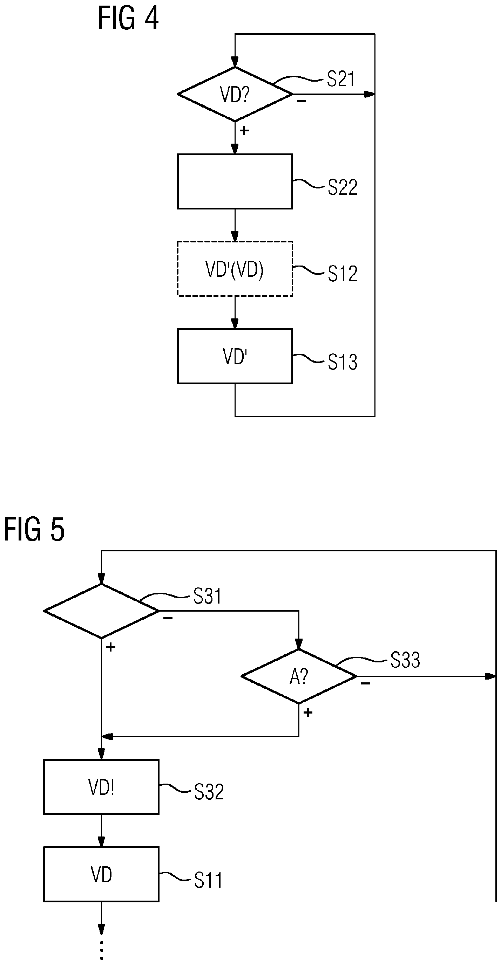

Beispielsweise kann auf Seiten des Rechners 9 gewährleistet sein, dass der Rechner 9 immer wieder eigenständig eine Übermittlung neuer Verifizierungsdaten VD anstößt. In diesem Fall werden die verschlüsselten Verifizierungsdaten VD der Steuereinrichtung 1 von dem Rechner 9 in periodischen Zeitabständen vorgegeben. In diesem Fall ist der Schritt S11 entsprechend der Darstellung in FIG 4 in zwei Schritte S21 und S22 aufgeteilt. Im Schritt S21 prüft die Steuereinrichtung 1, ob ihr die Verifizierungsdaten VD übermittelt werden. Sobald dies der Fall ist, nimmt die Steuereinrichtung 1 die übermittelten Verifizierungsdaten VD im Schritt S22 entgegen.

Alternativ ist es möglich, dass die Steuereinrichtung 1 entsprechend der Darstellung in FIG 5 in einem Schritt S31 den Ablauf eines Timer 10 (siehe FIG 1) abwartet. Ist der Timer 10 abgelaufen, geht die Steuereinrichtung 1 zu einem Schritt S32 über. Im Schritt S32 fordert die Steuereinrichtung 1 bei dem Rechner 9 die Übermittlung neuer verschlüsselter Verifizierungsdaten VD an. Ist der Timer 10 noch nicht abgelaufen, kann die Steuereinrichtung 1 zum Schritt S31 zurückgehen. Alternativ oder zusätzlich zum Vorhandensein des Schrittes S31 ist es möglich, dass ein Schritt S33 vorhanden ist. Im Schritt S33 prüft die Steuereinrichtung 1, ob ihr von einer Bedienperson 11 (siehe FIG 1) ein Aktualisierungsbefehl A vorgegeben wurde. Wenn dies der Fall ist, geht die Steuereinrichtung 1 zum Schritt S32 über. Anderenfalls geht sie zum Schritt S31 oder zum Schritt S33 zurück. Im Falle der Ausgestaltung gemäß FIG 5 ist also die Steuereinrichtung 1 der aktive Teil, der die Übermittlung der verschlüsselten Verifizierungsdaten VD anfordert.

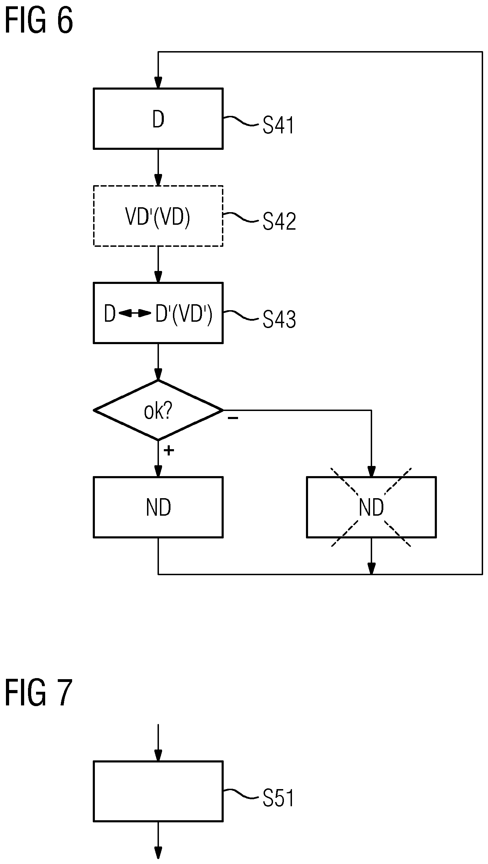

Weiterhin nimmt die Steuereinrichtung 1 gemäß FIG 6 in einem Schritt S41 Zugangsdaten D entgegen. Die Vorgabe der Zugangsdaten D kann zu einem beliebigen Zeitpunkt erfolgen. Die Zugangsdaten D können der Steuereinrichtung 1 beispielsweise durch die Bedienperson 11 vorgegeben werden. Falls der Schritt S12 (siehe FIG 3) entfallen sollte, entschlüsselt die Steuereinrichtung 1 in einem Schritt S42 die gespeicherten Verifizierungsdaten VD und ermittelt so die entschlüsselten Verifizierungsdaten VD'. Der Schritt S42 ist in FIG 6 nur gestrichelt dargestellt, weil er nur dann vorhanden ist, wenn der Schritt S12 nicht vorhanden ist. Er korrespondiert inhaltlich mit dem Schritt S12.

Im Schritt S43 vergleicht die Steuereinrichtung 1 die entgegengenommenen Zugangsdaten D mit einer aktuellen Zugangsberechtigung D'. Die aktuelle Zugangsberechtigung P' leitet die Steuereinrichtung 1 aus den entschlüsselten Verifizierungsdaten VD' ab. Im einfachsten Fall ist die aktuelle Zugangsberechtigung D' mit den entschlüsselten Verifizierungsdaten VD' identisch. In vielen Fällen enthalten die entschlüsselten Verifizierungsdaten VD' jedoch die zum Prüfen der Zugangsberechtigung erforderlichen Daten für viele Personen oder viele Geräte. In diesem Fall separiert die Steuereinrichtung 1 im Rahmen des Schrittes S43 zuvor die einzelnen Zugangsberechtigungen D'.

Im Schritt S44 prüft die Steuereinrichtung 1, ob sich bei dem Vergleich des Schrittes S43 eine Übereinstimmung ergibt. Im Falle der Übereinstimmung gibt die Steuereinrichtung 1 in einem Schritt S45 den Zugriff der Bedienperson 11 auf die Nutzdaten ND frei. Anderenfalls, also im Falle der Nichtübereinstimmung, gibt die Steuereinrichtung 1 in einem Schritt S46 den Zugriff nicht frei.

Wie obenstehend bereits erwähnt, sind auch die entschlüsselten Verifizierungsdaten VD' noch intern verschlüsselt. Im Rahmen des Schrittes S44 erfolgt daher vor dem eigentlichen Vergleich noch eine nochmalige Entschlüsselung der Verifizierungsdaten VD'. Diese Verifizierungsdaten VD' werden von der Steuereinrichtung 1 also nur dann (vollständig) entschlüsselt, wenn sie aktuell benötigt werden. Alternativ ist es möglich, dass die Steuereinrichtung 1 im Rahmen des Schrittes S41 die vorgegebenen Zugangsdaten D aktuell verschlüsselt und im Rahmen des Schrittes S44 den Vergleich von Zugangsdaten D und Zugangsberechtigung D' auf dieser Basis vornimmt. Beispielsweise können sogenannte Hashwerte miteinander verglichen werden.

Wie bereits erwähnt, erfolgt die Verschlüsselung (also die Ermittlung der verschlüsselten Verifizierungsdaten VD) vorzugsweise mittels eines ersten Schlüssels (public key) und die Entschlüsselung (also die Ermittlung der unverschlüsselten Verifizierungsdaten VD') mittels eines zweiten, vom ersten Schlüssel verschiedenen Schlüssels (private key). Damit der Rechner 9 die verschlüsselten Verifizierungsdaten VD ermitteln kann, muss dem Rechner 9 der erste Schlüssel (public key) bekannt sein. Es ist möglich, dass der erste Schlüssel und der zweite Schlüssel dem Hersteller der Steuereinrichtung 1 bereits bei der Herstellung der Steuereinrichtung 1 bekannt sin. In diesem Fall kann der Hersteller den zweiten Schlüssel in der Steuereinrichtung 1 hinterlegen, während er den ersten Schlüssel intern speichert. Eine Veröffentlichung des ersten Schlüssels ist zwar möglich, aber nicht zwingend erforderlich. Alternativ ist es möglich, beide Schlüssel in der Steuereinrichtung 1 zu hinterlegen. In diesem Fall ist es möglich, dass die Steuereinrichtung 1 entsprechend der Darstellung in FIG 7 auch einen Schritt S51 ausführt, in dem die Steuereinrichtung 1 den ersten Schlüssel zum Abruf über das Rechnernetz 8 bereitstellt. Alternativ oder zusätzlich kann die Steuereinrichtung 1 den ersten Schlüssel zum Abruf über eine an der Steuereinrichtung 1 angeordnete Schnittstelle 12 bereitstellen.

Im Falle der Bereitstellung des ersten Schlüssels über das Rechnernetz 8 ist es möglich, dass die Steuereinrichtung 1 die Vorgehensweise von FIG 7 parallel bzw. quasi parallel zu den Vorgehensweisen der FIG 2 bis 6 im Hintergrund ausführt. In diesem Fall führt die Steuereinrichtung 1 die Vorgehensweise der FIG 7 also unabhängig davon aus, ob auch die Vorgehensweisen der FIG 2 bis 6 ausgeführt werden oder nicht. Alternativ ist es möglich, dass die Steuereinrichtung 1 den ersten Schlüssel in Reaktion auf eine konkrete Anfrage des Rechners 9 an den Rechner 9 übermittelt. Im Falle der Bereitstellung des ersten Schlüssels über die an der Steuereinrichtung 1 angeordnete Schnittstelle 12 erfolgt die Übermittlung in der Regel in Reaktion auf eine konkrete Anfrage der Bedienperson 11.

Die Steuereinrichtung 1 führt weiterhin in der Regel entweder die Vorgehensweise von FIG 3 und die zugehörigen Ausgestaltungen gemäß den FIG 4 und 5 ebenfalls im Hintergrund aus, also unabhängig davon, ob die Vorgehensweisen der FIG 2 und 6 ausgeführt werden oder nicht. Die Vorgehensweisen der FIG 2 und 6 hingegen schließen sich in der Regel aus. Es ist also zwar ohne weiteres möglich, dass zu einem bestimmten Zeitpunkt weder die Vorgehensweise der FIG 2 noch die Vorgehensweise der FIG 6 ausgeführt wird. Ebenso ist möglich, dass zu einem bestimmten Zeitpunkt entweder die Vorgehensweise der FIG 2 oder die Vorgehensweise der FIG 6 ausgeführt wird. Hingegen ist es in der Regel nicht zulässig, dass zu einem bestimmten Zeitpunkt sowohl die Vorgehensweise der FIG 2 als auch die Vorgehensweise der FIG 6 ausgeführt wird. In Ausnahmefällen kann aber auch dies möglich sein.

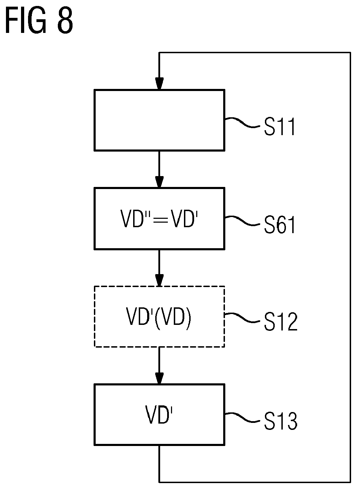

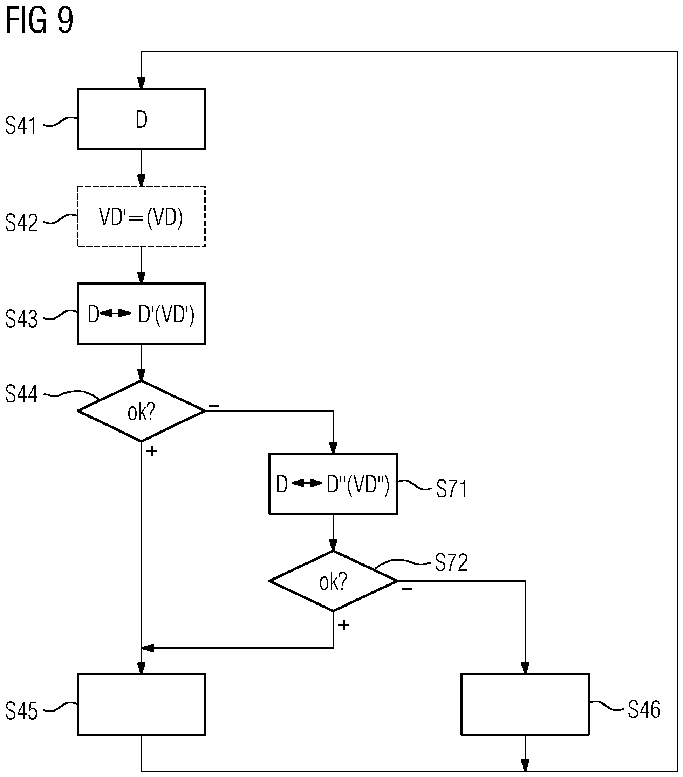

Die Vorgehensweise der FIG 3 kann weiterhin so modifiziert werden, wie dies nachstehend in Verbindung mit FIG 8 erläutert wird. In diesem Fall wird die Vorgehensweise gemäß FIG 6 so modifiziert, wie dies nachstehend in Verbindung mit FIG 9 erläutert wird.

Die Vorgehensweise der FIG 3 wird, wie bereits erwähnt, von Zeit zu Zeit erneut ausgeführt. Wenn die Steuereinrichtung 1 zu einem bestimmten Zeitpunkt Verifizierungsdaten VD entgegennimmt, sind zu diesem Zeitpunkt innerhalb der Steuereinrichtung 1 bereits andere Verifizierungsdaten VD' gespeichert. Sinn und Zweck der Vorgehensweise von FIG 8 ist es, diese bereits gespeicherten Verifizierungsdaten VD' für eine (1) Iteration, also bis zum nächsten Zeitpunkt, zu dem wieder neue Verifizierungsdaten VD entgegengenommen werden, zu erhalten. FIG 8 umfasst daher zusätzlich zu den Schritten von FIG 3 einen Schritt S61. Im Schritt S61 hält die Steuereinrichtung 1 diejenigen Verifizierungsdaten VD', die zum Zeitpunkt der Entgegennahme der Verifizierungsdaten VD innerhalb der Steuereinrichtung 1 bereits als aktuelle Verifizierungsdaten VD' gespeichert sind, weiterhin gespeichert. Sie markiert diese Verifizierungsdaten VD' jedoch als alte Verifizierungsdaten VD". Zur Implementierung des Schrittes S61 kann beispielsweise ein Umspeichern der zunächst noch aktuellen Verifizierungsdaten VD' von einem Basisspeicher 13 in einen Zusatzspeicher 14 erfolgen. Erst danach speichert die Steuereinrichtung 1 die aus den neu entgegengenommenen Verifizierungsdaten VD ermittelten entschlüsselten Verifizierungsdaten VD' im Basisspeicher 13 ab. Im Zusatzspeicher 14 zuvor enthaltene Daten werden überschrieben.

Zu jedem Zeitpunkt bis zur nächsten Aktualisierung der Verifizierungsdaten VD' stehen der Steuereinrichtung 1 daher (exakt) zwei Verifizierungsdaten VD', VD" zur Verfügung, nämlich einerseits die aktuellen Verifizierungsdaten VD' und andererseits die alten Verifizierungsdaten VD". Es ist daher möglich, dass entsprechend der Darstellung in FIG 9 zusätzlich zu den Schritten von FIG 6 ein Schritt S71 vorhanden ist, in dem die Steuereinrichtung 1 die entgegengenommenen Zugangsdaten D mit einer alten Zugangsberechtigung D" vergleicht. Soweit erforderlich, kann der Schritt S71 auch die Entschlüsselung der alten Verifizierungsdaten VD" mit beinhalten. Weiterhin prüft die Steuereinrichtung 1 in einem Schritt S72, ob sich bei dem Vergleich des Schrittes S71 eine Übereinstimmung ergibt. Im Falle der Übereinstimmung geht Steuereinrichtung 1 zum Schritt S45 über. Anderenfalls geht die Steuereinrichtung 1 zum Schritt S46 über.

Die Schritte S71 und S72 korrespondieren also inhaltlich mit den Schritten S43 (gegebenenfalls einschließlich des Schrittes S42) und S44, allerdings bezogen auf den Vergleich der Zugangsdaten D mit einer aus den alten Verifizierungsdaten VD" abgeleiteten alten Zugangsberechtigung D".

Die Vorgehensweise der FIG 8 und 9 ist insbesondere dann von Vorteil, wenn ein Fehler in der Steuereinrichtung 1 genau zu dem Zeitpunkt auftritt, zu dem eine Aktualisierung der Verifizierungsdaten VD' erfolgt. Denn dadurch steht der Steuereinrichtung 1 auch dann ein gültiger Satz von Verifizierungsdaten zur Verfügung, nämlich die alten Verifizierungsdaten VD" .

Zusammengefasst betrifft die vorliegende Erfindung somit folgenden Sachverhalt:
Eine Steuereinrichtung 1 einer Maschine oder Anlage 2 nimmt zu beliebigen Zeitpunkten Zugangsdaten D entgegen und vergleicht sie mit einer aktuellen Zugangsberechtigung D'. Im Falle der Übereinstimmung gibt die Steuereinrichtung 1 den Zugriff auf innerhalb der Steuereinrichtung 1 gespeicherte Nutzdaten ND frei, anderenfalls gibt sie den Zugriff auf die Nutzdaten ND zumindest vorläufig nicht frei. Die Steuereinrichtung 1 erstellt und/oder berücksichtigt die Nutzdaten ND im Rahmen der Steuerung der Maschine oder Anlage 2. Die Steuereinrichtung 1 nimmt von Zeit zu Zeit über eine Anbindung 7 an ein Rechnernetz 8 von einem Rechner 9 verschlüsselte Verifizierungsdaten VD entgegen und speichert die entgegengenommenen Verifizierungsdaten VD in verschlüsselter oder in unverschlüsselter Form als aktuelle Verifizierungsdaten VD'. Sie leitet die aktuelle Zugangsberechtigung D' aus den unverschlüsselten aktuellen Verifizierungsdaten VD' ab.

Die vorliegende Erfindung weist viele Vorteile auf. Insbesondere werden die sicherheitstechnischen Probleme des Standes der Technik umfassend behoben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Steuereinrichtung (1) einer Maschine oder Anlage (2),
- wobei die Steuereinrichtung (1) zu beliebigen Zeitpunkten Zugangsdaten (D) entgegennimmt,
- wobei die Steuereinrichtung (1) die entgegengenommenen Zugangsdaten (D) mit einer aktuellen Zugangsberechtigung (D') vergleicht,
- wobei die Steuereinrichtung (1) im Falle der Übereinstimmung den Zugriff auf innerhalb der Steuereinrichtung (1) gespeicherte Nutzdaten (ND) freigibt und im Falle der Nichtübereinstimmung den Zugriff auf die innerhalb der Steuereinrichtung (1) gespeicherten Nutzdaten (ND) zumindest vorläufig nicht freigibt,
- wobei die Steuereinrichtung (1) die Nutzdaten (ND) im Rahmen der Steuerung der Maschine oder Anlage (2) erstellt und/oder berücksichtigt,
**dadurch gekennzeichnet,**
- **dass** die Steuereinrichtung (1) von Zeit zu Zeit über eine Anbindung (7) an ein Rechnernetz (8) von einem Rechner (9) verschlüsselte Verifizierungsdaten (VD) entgegennimmt und die entgegengenommenen Verifizierungsdaten (VD) in verschlüsselter oder in unverschlüsselter Form als aktuelle Verifizierungsdaten (VD') abspeichert und
- **dass** die Steuereinrichtung (1) die aktuelle Zugangsberechtigung (D') aus den unverschlüsselten aktuellen Verifizierungsdaten (VD') ableitet.

2. Betriebsverfahren nach Anspruch 1,
**dadurch gekennzeichnet,**
- **dass** die Steuereinrichtung (1) Verifizierungsdaten (VD'), die zum Zeitpunkt der Entgegennahme der Verifizierungsdaten (VD) innerhalb der Steuereinrichtung (1) als aktuelle Verifizierungsdaten (VD') gespeichert sind, als alte Verifizierungsdaten (VD") gespeichert hält,
- **dass** die Steuereinrichtung (1) die entgegengenommenen Zugangsdaten (D) auch mit einer aus den alten Verifizierungsdaten (VD") abgeleiteten alten Zugangsberechtigung (D") vergleicht,
- **dass** die Steuereinrichtung (1) den Zugriff der Bedienperson (11) auf die innerhalb der Steuereinrichtung (1) gespeicherte Nutzdaten (ND) freigibt, wenn die entgegengenommenen Zugangsdaten (D) mit der aktuellen Zugangsberechtigung (D') oder der alten Zugangsberechtigung (D") übereinstimmen, und
- **dass** die Steuereinrichtung (1) den Zugriff auf die innerhalb der Steuereinrichtung (1) gespeicherten Nutzdaten (ND) nur dann nicht freigibt, wenn die entgegengenommenen Zugangsdaten (D) weder mit der aktuellen Zugangsberechtigung (D') noch mit der alten Zugangsberechtigung (D") übereinstimmen.

3. Betriebsverfahren nach Anspruch 1 oder 2,
**dadurch gekennzeichnet,**
**dass** die Steuereinrichtung (1) die entgegengenommenen Verifizierungsdaten (VD) vor oder nach dem Abspeichern der Verifizierungsdaten (VD) mittels eines geheimen Schlüssels entschlüsselt und dass die Steuereinrichtung (1) zum Verschlüsseln der Verifizierungsdaten (VD) einen vom geheimen Schlüssel verschiedenen öffentlichen Schlüssel zum Abruf über das Rechnernetz (8) und/oder eine an der Steuereinrichtung (1) angeordnete Schnittstelle (12) bereitstellt.

4. Betriebsverfahren nach Anspruch 1, 2 oder 3,
**dadurch gekennzeichnet,**
**dass** die verschlüsselten Verifizierungsdaten (VD) der Steuereinrichtung (1) von dem Rechner (9) in periodischen Zeitabständen vorgegeben werden oder dass die Steuereinrichtung (1) die verschlüsselten Verifizierungsdaten (VD) aufgrund eines durch die Steuereinrichtung (1) überwachten Zeitablaufs und/oder aufgrund einer Vorgabe eines Aktualisierungsbefehls (A) durch die Bedienperson (11) abruft.

5. Betriebsverfahren nach einem der obigen Ansprüche,
**dadurch gekennzeichnet,**
**dass** die Steuereinrichtung (1) als CNC, als MC, als SPS oder als Antriebssteuerung ausgebildet ist.

6. Computerprogramm, das Maschinencode (6) umfasst, der von einer Steuereinrichtung (1) für eine Anlage oder Maschine (2) abarbeitbar ist, wobei die Abarbeitung des Maschinencodes (6) durch die Steuereinrichtung (1) bewirkt, dass die Steuereinrichtung (1) ein Betriebsverfahren nach einem der obigen Ansprüche ausführt.

7. Steuereinrichtung für eine Anlage oder Maschine (2),
- wobei die Steuereinrichtung eine Anbindung (7) an ein Rechnernetz (8) aufweist, über welche die Steuereinrichtung mit einem Rechner (9) verbindbar ist,
- wobei die Steuereinrichtung mit einem Computerprogramm (5) nach Anspruch 6 programmiert ist, so dass sie ein Betriebsverfahren nach einem der Ansprüche 1 bis 5 ausführt.
